# EUROPÄISCHE PATENTANMELDUNG

(11) **EP 4 464 549 A1**
(43) Veröffentlichungstag der Anmeldung: **20.11.2024**
(21) Anmeldenummer: 24161086.4
(22) Anmeldetag: 04.03.2024
(51) Int. Cl.: B60N 2/06, B60N 2/14, B60N 2/005

(54) **FAHRZEUGSITZ**

(30) Priorität: 17.05.2023 DE 102023113094
(71) Anmelder: GRAMMER AG, 92289 Ursensollen (DE)
(72) Erfinder: Wittl, Sebastian, 92224 Amberg (DE)
(74) Vertreter: Hannke, Christian

(57) **Zusammenfassung**

Die Erfindung betrifft einen Fahrzeugsitz mit einem Sitzteil und mit einem unterhalb des Sitzteils angeordneten Sitzunterbau-Trageteil, welches dazu vorgesehen und ausgebildet ist, das Sitzteil zu tragen, und einem Sitzunterbau-Basisteil, wobei das Sitzunterbau-Trageteil gegenüber dem Sitzunterbau-Basisteil mittels einer Verschiebeeinrichtung entlang einer Verlagerungsrichtung verschiebbar ist und wobei eine Dreheinheit vorgesehen ist, welche dazu vorgesehen und ausgebildet ist, dass das Sitzteil gegenüber dem Sitzunterbau-Trageteil um eine Drehachse drehbar ist. Erfindungsgemäß ist es vorgesehen, dass bei einer Verlagerung des Sitzunterbau-Trageteils eine Verlagerungsposition des Sitzunterbau-Trageteils abhängig ist von einem Drehwinkel der Dreheinheit und bei einer Drehung des Sitzteils der Drehwinkel der Dreheinheit abhängig ist von der Verlagerungsposition des Sitzunterbau-Trageteils.

## Beschreibung

Die vorliegende Patentanmeldung betrifft einen Fahrzeugsitz mit einem Sitzteil und mit einem unterhalb des Sitzteils angeordneten Sitzunterbau-Trageteil, welches dazu vorgesehen und ausgebildet ist, das Sitzteil zu tragen, und einem Sitzunterbau-Basisteil, wobei das Sitzunterbau-Trageteil gegenüber dem Sitzunterbau-Basisteil mittels einer Verschiebeeinrichtung entlang einer Verlagerungsrichtung verschiebbar ist und wobei eine Dreheinheit vorgesehen ist, welche dazu vorgesehen und ausgebildet ist, dass das Sitzteil gegenüber dem Sitzunterbau-Trageteil um eine Drehachse drehbar ist, gemäß dem Oberbegriff des Patentanspruches 1.

Aus dem Stand der Technik ist beispielsweise aus der DE 10 2012 112 523 ein derartiger Fahrzeugsitz bekannt. Dadurch, dass gemäß dem aus dem Stand der Technik bekannten Fahrzeugsitz die Drehung und die Längsverstellung unabhängig voneinander ausgebildet sind, kann auch bei beengten Platzverhältnissen, beispielsweise wenn der Fahrzeugsitz nach hinten geschoben ist und durch Armlehnen, Armaturen und dergleichen in seiner Drehbewegung begrenzt ist, eine Drehung durchgeführt werden, welche eigentlich nicht vorgesehen ist, da ein Anschlagen von Teilen des Fahrzeugsitzes an weiteren Armaturen der Kabine oder dergleichen nicht verhindert wird, was zu einer Beschädigung der jeweiligen Bauteile führen kann.

Es ist daher die Aufgabe der vorliegenden Anmeldung, einen Fahrzeugsitz bereitzustellen, welcher konstruktiv besonders einfach ausgestaltet ist und die Nachteile des Standes der Technik überkommt.

Gelöst wird die zugrunde liegende Aufgabe durch einen Fahrzeugsitz mit den Merkmalen des Patentanspruches 1.

Erfindungsgemäß ist es ein Kerngedanke der vorliegenden Anmeldung, einen Fahrzeugsitz mit einem Sitzteil und mit einem unterhalb des Sitzteils angeordneten Sitzunterbau-Trageteil, welches dazu vorgesehen und ausgebildet ist, das Sitzteil zu tragen, und einem Sitzunterbau-Basisteil, wobei das Sitzunterbau-Trageteil gegenüber dem Sitzunterbau-Basisteil mittels einer Verschiebeeinrichtung entlang einer Verlagerungsrichtung verschiebbar ist und wobei eine Dreheinheit vorgesehen ist, welche dazu vorgesehen und ausgebildet ist, dass das Sitzteil gegenüber dem Sitzunterbau-Trageteil um eine Drehachse drehbar ist, wobei sich der Fahrzeugsitz erfindungsgemäß dadurch kennzeichnet, dass bei einer Verlagerung des Sitzunterbau-Trageteils eine Verlagerungsposition des Sitzunterbau-Trageteils abhängig ist von einem Drehwinkel der Dreheinheit und bei einer Drehung des Sitzteils der Drehwinkel der Dreheinheit abhängig ist von der Verlagerungsposition des Sitzunterbau-Trageteils.

Dabei kann es denkbar sein, dass ein Drehwinkel als eine Drehwinkelposition angesehen werden kann hinsichtlich der Dreheinheit bzw. hinsichtlich dem Sitzteil. Der Drehwinkel beschreibt eine Drehwinkelposition des Sitzteils bzw. der Dreheinheit, welche auch als Drehposition beschrieben werden kann.

Besonders bevorzugt verläuft die Drehachse entlang einer Höhenrichtung, insbesondere einer Höhenrichtung des Fahrzeugsitzes.

Besonders bevorzugt handelt es sich um die Verlagerungsrichtung um eine Längsrichtung oder einer Breitenrichtung des Fahrzeugsitzes, wobei die Längsrichtung bevorzugt ist. Eine Verlagerung des Fahrzeugsitzes entlang der Längsrichtung nach hinten oder nach vorne und der erfindungsgemäßen Abhängigkeit zu dem Drehwinkel der Dreheinheit ist ein zentraler Punkt dieser Erfindung. Dabei kann es auch bevorzugt vorgesehen sein, dass die Dreheinheit sowohl im Uhrzeigersinn als auch gegen den Uhrzeigersinn drehbar ist. Alternativ kann es auch vorgesehen sein, dass durch die Dreheinheit nur eine Bewegung im Uhrzeigersinn oder gegen den Uhrzeigersinn möglich ist. Dies ist abhängig von dem Einsatzgebiet und den Anforderungen an Platzverhältnisse bzw. Anforderungen eines Fahrers.

Erfindungsgemäß ist es vorgesehen, dass bei einer Verlagerung des Sitzunterbau-Trageteils eine Verlagerungsposition des Sitzunterbau-Trageteils abhängig ist von einem Drehwinkel der Dreheinheit und bei einer Drehung des Sitzteils der Drehwinkel der Dreheinheit abhängig ist von der Verlagerungsposition des Sitzunterbau-Trageteils. Dies bedeutet, dass wenn eine Person den Fahrzeugsitz einerseits in Verlagerungsrichtung verschieben möchte, die möglichen Verlagerungspositionen abhängig sind von dem Drehwinkel, um welche das Sitzteil gedreht ist.

Gleiches gilt analog für den Fall, wenn die Person den Fahrzeugsitz drehen möchte, der mögliche Drehwinkel abhängig ist von der Verlagerungsposition, in welcher sich das Sitzteil gerade befindet. Beispielsweise ist es zugrunde gelegt, dass gerade bei einem nach hinten verschobenen Sitz aufgrund des geringen Platzes keine oder nur eingeschränkte Drehbewegungen möglich sind. Gleiches gilt auch, dass bei einem Fahrzeugsitz, dessen Sitzteil einen beachtlichen Drehwinkel aufweist, eben nicht in den Bereich des geringen Platzangebots verlagert werden kann.

Die Verlagerung ist eine Funktion abhängig vom Drehwinkel und die Drehung ist eine Funktion abhängig von der Verlagerungsposition.

Eine Verlagerungsposition kann dabei verstanden werden als eine Position des Sitzteils nach einer Verlagerung in einem gesamten Verlagerungsbereich nach hinten oder nach vorne.

Gemäß einer bevorzugten Ausführungsform kann es dementsprechend vorgesehen sein, dass bei Verlagerung des Sitzunterbau-Trageteils abhängig von dem Drehwinkel begrenzt ist, und bei Drehung des Sitzteils der Drehwinkel abhängig von der Verlagerungsposition begrenzt ist.

Gemäß einer besonders bevorzugten Ausführungsform ist es vorgesehen, dass eine Verlagerung entlang der Verlagerungsrichtung nach hinten begrenzt ist durch den Drehwinkel. Bevorzugt gilt dies auch für den Drehwinkel, das heißt, dass der Drehwinkel begrenzt ist durch die Verlagerungsposition durch Verlagerung des Sitzteils nach hinten.

Insbesondere ist es vorgesehen, dass die Verschiebeeinrichtung eine Null-Position aufweist. Bevorzugt kann die Null-Position derart verstanden werden, dass eine Verlagerung des Sitzteils nach vorne und nach hinten möglich ist. Weiter bevorzugt ist eine Verlagerung nach vorne bzw. nach hinten ausgehend von der Null-Position um einen maximalen Verlagerungsweg nach vorne und um einen maximalen Verlagerungsweg nach hinten möglich.

Insbesondere ist es vorgesehen, dass die Dreheinheit eine Null-Position aufweist. Bevorzugt kann die Null-Position derart verstanden werden, dass die Dreheinheit einen Drehwinkel von 0° aufweist, das heißt, dass das Sitzteil in seiner normalen Position ist, also beispielsweise das Sitzteil in Längsrichtung nach vorne gerichtet ist. Die Längserstreckung des Sitzteils ist also parallel zu der Verlagerungsrichtung. Weiter kann der Drehwinkel beschrieben sein als der Winkel, welcher durch das Sitzteil bzw. durch die Längserstreckung des Sitzteils und durch die Verlagerungsrichtung eingeschlossen ist. Weiter bevorzugt ist eine Verlagerung nach vorne bzw. nach hinten ausgehend von der Null-Position um einen maximalen Verlagerungsweg nach vorne und um einen maximalen Verlagerungsweg nach hinten möglich.

Gemäß einer bevorzugten Ausführungsform kann es vorgesehen sein, dass lediglich bei einer nach hinten verlagerten Verlagerungsposition eine Begrenzung von Drehwinkel und Verlagerung vorgesehen ist. Dies bedeutet, dass eine Verlagerung nach vorne, beispielsweise ausgehend von der Null-Position, und die Drehung des Sitzteils unabhängig voneinander sind. Da das Platzangebot vor dem Fahrzeugsitz großzügiger ausgebildet ist, kann dies vorteilhaft sein, nämlich dahingehend, dass ein Einsteigen bzw. Platznehmen auf dem Fahrzeugsitz durch entsprechende Drehbarkeit erleichtert werden kann.

Gemäß einer weiteren bevorzugten Ausführungsform kann es vorgesehen sein, dass die Verschiebeeinrichtung eine erste Schieneneinheit und eine zweite Schieneneinheit mit jeweils einem erstes Schienenelement und einem zweitem Schienenelement aufweist, wobei die Schieneneinheiten in einer Richtung senkrecht zu der Verlagerungsrichtung voneinander beabstandet sind. Durch die Beabstandung der Schieneneinheiten zueinander kann das Sitzteil des Fahrzeugsitzes gut in einer Ebene gebildet durch die Schieneneinheiten verlagert werden.

Weiter bevorzugt sind die Schieneneinheiten bzw. die Schienenelemente länglich ausgebildet, so dass eine gute Führung der Schienenelemente zueinander möglich ist. Das erste Schienenelement und das zweite Schienenelement sind relativ zueinander verlagerbar ausgebildet, wodurch eine Verlagerung des Sitzunterbau-Trageteils ermöglicht wird.

Gemäß einer weiteren bevorzugten Ausführungsform kann es vorgesehen sein, dass jeweils das erste Schienenelement mit dem Sitzunterbau-Trageteil und das zweite Schienenelement mit dem Sitzunterbau-Basisteil verbunden ist und die Schienenelemente derart zueinander ausgebildet sind, dass das erste Schienenelement gegenüber dem zweiten Schienenelement verschiebbar ist. Das erste Schienenelement wird bei einer Verlagerung des Sitzunterbau-Trageteils mit diesem verlagert, wohingegen das zweite Schienenelement mit dem Sitzunterbau-Basisteil verbunden, insbesondere ortsfest verbunden, ist, und entsprechend keine Verlagerung erfährt.

Gemäß einer weiteren bevorzugten Ausführungsform kann es vorgesehen sein, dass die Dreheinheit mit dem Sitzunterbau-Trageteil verbunden ist. Die Dreheinheit kann daher ein integraler Bestandteil des Sitzunterbau-Trageteils sein oder alternativ derart ausgebildet sein, dass die Dreheinheit lösbar mit dem Sitzunterbau-Trageteil verbunden ist, so dass bei einer Beschädigung der Dreheinheit diese einfach und kostengünstig ersetzt werden kann. Mittels der Dreheinheit kann das Sitzteil um die Drehachse gedreht werden.

Gemäß einer weiteren bevorzugten Ausführungsform kann es vorgesehen sein, dass die Abhängigkeit zwischen Verlagerung und Drehwinkel durch ein erstes Anschlagelement und ein zweites Anschlagelement hergestellt werden kann. Besonders bevorzugt ist das erste Anschlagelement mit der Dreheinheit und das zweite Anschlagelement mit der Verschiebeeinrichtung verbunden. Bevorzugt können die Anschlagelemente derart ausgebildet sein, dass die Anschlagelemente miteinander wechselwirken können. Dies bedeutet, dass bei einer Verlagerung bzw. Drehung durch eine Wechselwirkung der Anschlagelemente miteinander entsprechend die Drehung bei Verlagerung bzw. die Verlagerung bei Drehung gekoppelt und begrenzt werden können.

Um die Verlagerung und die Drehung einfach koppeln zu können, kann es gemäß einer bevorzugten Ausführungsform vorgesehen sein, dass das erste Anschlagelement mit der Dreheinheit und das zweite Anschlagelement mit der Verschiebeeinrichtung verbunden sind. Besonders bevorzugt ist das zweite Anschlagelement ortsfest mit dem Sitzunterbau-Basisteil verbunden, das heißt, dass das zweite Anschlagelement keine Verlagerung erfährt.

Um das zweite Anschlagelement platzsparend anzuordnen, kann es gemäß einer weiteren bevorzugten Ausführungsform vorgesehen sein, dass das zweite Anschlagelement in der Richtung senkrecht zu der Verlagerungsrichtung gesehen zwischen der ersten Schieneneinheit und der zweiten Schieneneinheit angeordnet ist.

Weiter bevorzugt ist es vorgesehen, dass das zweite Anschlagelement unterhalb des Sitzunterbau-Trageteils und oberhalb des Sitzunterbau-Basisteils angeordnet ist. Auch hierdurch ist eine Platzeinsparung hinsichtlich der Höhenrichtung gegeben.

Gemäß einer weiteren bevorzugten Ausführungsform kann es zur weiteren Platzeinsparung vorgesehen sein, dass das erste Anschlagelement unterhalb in Höhenrichtung gesehen der Dreheinheit angeordnet ist. Weiter bevorzugt ist das erste Anschlagelement unterhalb des Sitzunterbau-Trageteils angeordnet, wodurch eine freie Bewegung des Anschlagelements aufgrund der Anordnung an der Dreheinheit ermöglicht wird.

Besonders bevorzugt ist das erste Anschlagelement lösbar mit der Dreheinheit verbunden, um dieses bei Bedarf einfach austauschen zu können. Bevorzugt handelt es sich bei der lösbaren Verbindung um eine Schraubverbindung, eine Nietenverbindung oder dergleichen.

Gemäß einer weiteren bevorzugten Ausführungsform kann es vorgesehen sein, dass das erste Anschlagelement in einem Abstand zu der Drehachse mit der Dreheinheit verbunden ist. Das heißt, dass das erste Anschlagelement exzentrisch an der Dreheinheit verbunden ist. Durch diese Anordnung kann das erste Anschlagelement entlang eines Kreisbogens bei Drehung der Dreheinheit bewegt werden, wodurch ein Anteil der Drehbewegung in der Verlagerungsrichtung durchgeführt werden kann.

Gemäß einer weiteren bevorzugten Ausführungsform kann es vorgesehen sein, dass das erste Anschlagelement und das zweite Anschlagelement in der Verlagerungsrichtung gesehen überlappend zueinander ausgebildet sind. Insbesondere sind die Anschlagelemente derart ausgebildet, dass bei einem Drehwinkel von 0° und einer Verlagerung nach hinten sich die Anschlagelemente kontaktieren und wechselwirken, wodurch ein hinterer Endanschlag für die Verlagerung bzw. die Verlagerungseinrichtung realisiert sein kann. Eine Drehung wird in diesem Fall vollständig verhindert.

Gemäß einer weiteren bevorzugten Ausführungsform kann es vorgesehen sein, dass ein erstes Verbindungselement und ein zweites Verbindungselement vorgesehen sind, wobei bevorzugt das erste Verbindungselement unterhalb der ersten Schieneneinheit und das zweite Verbindungselement unterhalb der zweiten Schieneneinheit angeordnet ist und das zweite Anschlagelement mit dem ersten Verbindungselement verbunden ist.

Besonders bevorzugt ist das erste Verbindungselement direkt mit der ersten Schieneneinheit und das zweite Verbindungselement direkt mit der zweiten Schieneneinheit verbunden.

Weiter bevorzugt weisen das erste Verbindungselement und das zweite Verbindungselement eine gleiche Erstreckung in Höhenrichtung auf. Dadurch, dass das jeweilige Verbindungselement unterhalb der jeweiligen Schieneneinheit angeordnet ist, ist dies notwendig, um keine Schieflage bzw. Unebenheit des Sitzteils zu erhalten. Weiter bevorzugt weisen die Verbindungselemente eine Erstreckung auf, welche im Wesentlichen der Erstreckung der Schienenelemente entspricht, bevorzugt geringfügig kleiner ist als die Erstreckung der Schienenelemente. Dadurch kann eine gute Auflagefläche für die Schienenelemente dargestellt wird, wodurch ein Kippeln oder dergleichen verhindert werden kann.

Gemäß einer weiteren bevorzugten Ausführungsform kann es vorgesehen sein, dass eine Mittelachse, welche sich in der Verlagerungsrichtung erstreckt, vorgesehen ist, wobei bevorzugt die Mittelachse jeweils zu der ersten Schieneneinheit und der zweiten Schieneneinheit einen ersten Abstand aufweist. Das bedeutet, dass die Mittelachse von der ersten Schieneneinheit genauso weit beabstandet ist wie von der zweiten Schieneneinheit.

Besonders bevorzugt ist es vorgesehen, dass das erste Anschlagelement und das zweite Anschlagelement auf der gleichen Seite hinsichtlich der Mittelachse angeordnet sind. Hierdurch kann die Wechselwirkung zwischen den Anschlagelementen gut vollzogen werden und der benötigte Raum auf ein Minimum reduziert werden, in welchem die Anschlagelemente wechselwirken. Dadurch, dass das erste Anschlagelement und das zweite Anschlagelement auf der gleichen Seite hinsichtlich der Mittelachse angeordnet sind, bedeutet dies, dass entweder eine Drehung im Uhrzeigersinn oder gegen den Uhrzeigersinn mit der Längsverstellung gekoppelt ist.

Bevorzugt kann es vorgesehen sein, dass die Drehung im Uhrzeigersinn und/oder gegen den Uhrzeigersinn mit der Verlagerung des Sitzunterbau-Trageteils gekoppelt ist bzw. voneinander abhängig sind.

Um bevorzugt eine Drehung im Uhrzeigersinn und gegen den Uhrzeigersinn mit der Längsverstellung bzw. Verlagerung zu koppeln, kann es vorgesehen sein, dass ein drittes Anschlagelement und ein viertes Anschlagelement vorgesehen sind. Bevorzugt sind das dritte Anschlagelement und das vierte Anschlagelement auf der anderen Seite der Mittelachse angeordnet, so dass auch die andere Drehrichtung mit der Verlagerung des Sitzunterbau-Trageteils gekoppelt werden kann.

Besonders bevorzugt sind die möglichen Ausgestaltungen, Merkmale, und Ausführungsformen hinsichtlich des ersten Anschlagelements und des zweiten Anschlagelements in analoger Weise auf das dritte Anschlagelement und das vierte Anschlagelement übertragbar. Besonders bevorzugt kann das dritte Anschlagelement wie das ersten Anschlagelement und das vierte Anschlagelement wie das zweite Anschlagelement ausgebildet sein. Bevorzugt ist dabei zu beachten, dass sich das dritte und vierte Anschlagelement hinsichtlich der Mittelachse auf der anderen Seite als das erste und zweite Anschlagelement befindet.

Es kann also je nach Ausgestaltung des Fahrzeugsitzes sein, dass ein erstes und ein zweites Anschlagelement und/oder ein drittes und ein viertes Anschlagelement vorgesehen sind.

Besonders bevorzugt kann das dritte Anschlagelement zumindest ein Merkmal des ersten Anschlagelements aufweisen, bevorzugt auch alle Merkmale. Es kann aber auch sein, dass das erste Anschlagelement andere Merkmale als das dritte Anschlagelement aufweist. Gleiches gilt in analoger Weise auch für das zweite und das vierte Anschlagelement.

Weiterführende Ausgestaltungen und Ausbildungen in den Ausführungsformen untereinander sind auf die weiteren Ausführungen anwendbar und sind untereinander frei kombinierbar, sofern sie nicht gegenläufigen Ausführungsformen entsprechen.

Weitere vorteilhafte Ausführungsformen ergeben sich aus den Unteransprüchen.

Weitere Ziele, Vorteile und Zweckmäßigkeiten der vorliegenden Erfindung sind der nachfolgenden Beschreibung in Verbindung mit den Zeichnungen zu entnehmen.

Die Erfindung wird nachfolgend in Zusammenhang mit den Figuren näher dargestellt. Dabei zeigen:
- Fig. 1: einen Teil eines Fahrzeugsitzes in einer perspektivischen Ansicht;
- Fig. 2A: den Teil des Fahrzeugsitzes gemäß Figur 1 in einer Unteranschicht;
- Fig. 2B: eine Vergrößerung eines Ausschnitts der Figur 2A;
- Fig. 3A: den Teil des Fahrzeugsitzes gemäß Figur 1 in einer Unteranschicht in einer Drehstellung;
- Fig. 3B: eine Vergrößerung eines Ausschnitts der Figur 3A;
- Fig. 4: eine Übersicht über das Funktionsprinzips;
- Fig. 5A: eine Ausführungsform des ersten Anschlagelements;
- Fig. 5B: eine Ausführungsform des ersten Anschlagelements;
- Fig. 5C: eine Anordnung des ersten Anschlagselements gemäß Figur 5A mit der Dreheinheit;
- Fig. 5D: eine Anordnung des ersten Anschlagselements gemäß Figur 5B mit der Dreheinheit;
- Fig. 6: eine Ausführungsform des zweiten Anschlagelements;
- Fig. 7: einen Schnitt der Figur 1 in einer Vorderansicht;
- Fig. 8: eine weitere Übersicht über das Funktionsprinzips;
- Fig. 9: einen Fahrzeugsitz in einer Seitenansicht.

In den Figuren sind gleiche Bauteile jeweils mit den entsprechenden Bezugszeichen zu verstehen. Zur besseren Übersichtlichkeit können in manchen Figuren Bauteile nicht mit einem Bezugszeichen versehen sein, die jedoch an anderer Stelle bezeichnet worden sind.

In den vorliegenden Figuren ist rein exemplarisch eine Kopplung in einer Drehrichtung DR zwischen einem Sitzunterbau-Basisteil 4 und einem Sitzunterbau-Trageteil 3 gezeigt. Bevorzugt lassen sich hinsichtlich einer weiteren Drehrichtung DR die Merkmale aus Ausgestaltungen der einen Drehrichtung in analoger Weise für die weitere Drehrichtung anpassen und ausgestalten bzw. übertragen.

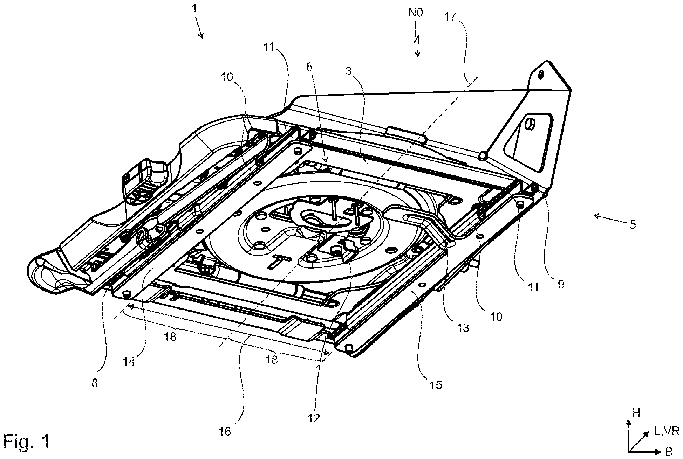

In der Figur 1 ist ein Fahrzeugsitz 1 gemäß einer bevorzugten Ausführungsform dargestellt, wobei ein Sitzteil 2, welches in Höhenrichtung H gesehen oberhalb eines Sitzunterbau-Trageteils 3 angeordnet ist, nicht dargestellt. Ebenso ist ein Sitzunterbau-Basisteil 4 nicht dargestellt, welches unterhalb in Höhenrichtung H gesehen des gezeigten Teils des Fahrzeugsitzes 1 angeordnet ist. Das Sitzunterbau-Trageteil 3 ist dazu vorgesehen und ausgebildet, das Sitzteil 2 zu tragen, wobei das Sitzteil 2 mit dem Sitzunterbau-Trageteil 3 verbunden ist.

Der Fahrzeugsitz 1 umfasst vorliegend weiter eine Dreheinheit 6 und eine Verschiebeeinrichtung 5. Die Verschiebeeinrichtung 5 ist dazu ausgebildet und vorgesehen, das Sitzunterbau-Trageteil 3 gegenüber dem Sitzunterbau-Basisteil 4 zu verschieben, insbesondere linear zu verschieben und besonders bevorzugt lediglich translatorisch zu verschieben. Bevorzugt kann das Sitzunterbau-Trageteil 3 entlang einer Längsrichtung L nach hinten und nach vorne verlagert werden, so dass die Längsrichtung L einer Verlagerungsrichtung VR entspricht.

Vorliegend ist die Verschiebeeinrichtung 5 ausgebildet durch eine erste Schieneneinheit 8 und eine zweite Schieneneinheit 9. Bevorzugt sind die Schieneneinheiten 8, 9 in einer Breitenrichtung B voneinander beabstandet mit einem ersten Abstand 16, welcher beispielsweise gebildet sein kann durch einen Abstand zwischen zwei innenliegenden Flächen der Schieneneinheiten 8, 9, welche sich gegenüberliegen.

Weiter bevorzugt ist es vorgesehen, dass der Verschiebeeinrichtung 5 eine Null-Position N0 zugeordnet ist. Bevorzugt kann die Null-Position N0 derart verstanden werden, dass eine Verlagerung des Sitzunterbau-Trageteils 3 nach vorne und nach hinten möglich ist. Weiter bevorzugt ist eine Verlagerung nach vorne bzw. nach hinten ausgehend von der Null-Position N0 um einen maximalen Verlagerungsweg nach vorne und um einen maximalen Verlagerungsweg nach hinten möglich. Besonders bevorzugt sind die Verlagerungswege gleich ausgebildet.

Die jeweilige Schieneneinheit 8, 9 umfasst ein erstes Schienenelement 10 und ein zweites Schienenelement 11. Bevorzugt sind das erste Schienenelement 10 und das zweite Schienenelement 11 relativ zueinander verlagerbar ausgebildet. Das erste Schienenelement 10 kann mit dem Sitzunterbau-Trageteil 3 und das zweite Schienenelement 11 kann mit dem Sitzunterbau-Basisteil 4 verbunden sein, insbesondere direkt oder indirekt verbunden sein. Indirekt heißt, dass weitere Bauteile zwischen dem Schienenelement 10, 11 und Sitzunterbau-Trageteil 3 bzw. dem Sitzunterbau-Basisteil 4 angeordnet sein können.

Weiter ist eine Dreheinheit 6 dargestellt, welche dazu ausgebildet und vorgesehen ist, das Sitzteil 2 gegenüber dem Sitzunterbau-Trageteil 3 um eine Drehachse 7 (hier nicht dargestellt) zu drehen. Die Drehachse 7 ist bevorzugt in Höhenrichtung H verlaufend angeordnet und besonders bevorzugt parallel zu der Höhenrichtung H ausgebildet. Die Dreheinheit 6 ist mit dem Sitzunterbau-Trageteil 3 derart ausgestaltet und mit diesem verbunden, dass das Sitzteil 2 gegenüber dem Sitzunterbau-Trageteil 3 gedreht werden kann. Bevorzugt kann das Sitzteil 2 mittels der Dreheinheit 6 im Uhrzeigersinn und gegen den Uhrzeigersinn verdreht werden.

Der Fahrzeugsitz 1 ist dabei derart ausgebildet, dass bei einer Verlagerung des Sitzunterbau-Trageteils 3 eine Verlagerungsposition des Sitzunterbau-Trageteils 3 abhängig ist von einem Drehwinkel der Dreheinheit 6 und bei einer Drehung des Sitzteils 2 der Drehwinkel der Dreheinheit 6 abhängig ist von der Verlagerungsposition des Sitzunterbau-Trageteils 3.

Dies bedeutet, dass wenn eine Person den Fahrzeugsitz 1 einerseits in Verlagerungsrichtung VR verschieben möchte, die möglichen Verlagerungspositionen des Sitzteils 2 abhängig sind von dem Drehwinkel der Dreheinheit 6, um welchen das Sitzteil 2 gedreht ist. Gleiches gilt analog für den Fall, wenn die Person das Sitzteil 2 drehen möchte, der mögliche Drehwinkel abhängig ist von der Verlagerungsposition des Sitzunterbau-Trageteils 3, in welcher sich das Sitzteil 2 gerade befindet.

Beispielsweise ist es zugrunde gelegt, dass gerade bei einem nach hinten verschobenen Sitzteil 2 bzw. Sitzunterbau-Trageteils 3 aufgrund des geringen Platzes keine oder nur eingeschränkte Drehbewegungen möglich sind. Gleiches gilt auch, dass bei einem Fahrzeugsitz 1, dessen Sitzteil 2 einen beachtlichen Drehwinkel aufweist, eben nicht in den Bereich des geringen Platzangebots verlagert werden kann.

Um die Verlagerung mit dem Drehwinkel und den Drehwinkel mit der Verlagerung zu koppeln, sind ein erstes Anschlagelement 12 und ein zweites Anschlagelement 13 vorgesehen.

Gemäß der Ausführungsform gemäß Figur 1 ist das erste Anschlagelement 12 mit der Dreheinheit 6 und das zweite Anschlagelement 13 mit dem Sitzunterbau-Basisteil 4 ortsfest gegenüber dem Sitzunterbau-Basisteil 4 verbunden.

Das bedeutet, dass durch die Verlagerbarkeit des Sitzunterbau-Trageteils 3 gegenüber dem Sitzunterbau-Basisteil 4 und der Verbindung zwischen dem ersten Anschlagelement 12 und der Dreheinheit 6 das erste Anschlagelement 12 ebenso in der Verlagerungsrichtung VR mit dem Sitzunterbau-Trageteil 3 und um die Drehachse 7 verlagerbar ist. Dies bedeutet wiederum, da das zweite Anschlagelement 13 ortsfest mit dem Sitzunterbau-Basisteil 4 verbunden ist, das erste Anschlagelement 12 relativ zu dem ersten Anschlagelement 13 verlagerbar ist hinsichtlich einer Verlagerung nach vorne und nach hinten und hinsichtlich einer Drehung um die erste Drehachse 7.

Die Anschlagelemente 12, 13 sind derart ausgebildet, dass eine Wechselwirkung zwischen den Anschlagelementen 12, 13 möglich ist, wobei die Wechselwirkung insbesondere eine mechanische Wechselwirkung darstellen kann, also die Anschlagelemente 12, 13 sich kontaktieren können. Die Wechselwirkung hängt dabei von der Verlagerungsposition und dem Drehwinkel des Sitzteils 2 ab.

Das erste Anschlagelement 12 und das zweite Anschlagelement 13 sind bevorzugt hinsichtlich einer Mittelachse 17 auf derselben Seite angeordnet. Die Mittelachse 17 erstreckt sich bevorzugt in der Verlagerungsrichtung VR. Weiter bevorzugt weist die Mittelachse 17 zu der ersten Schieneneinheit 8 und zu der zweiten Schieneneinheit 9 einen zweiten Abstand 18 auf, das heißt, dass die Mittelachse 17 von der ersten Schieneneinheit 8 genauso weit beabstandet ist wie von der zweiten Schieneneinheit 9.

Auf die Ausgestaltung des ersten Anschlagelements 12 und des zweiten Anschlagelements 13 wird in den weiteren Figuren weiter Bezug genommen.

Bevorzugt ist es vorgesehen, dass in Höhenrichtung H unterhalb des ersten Schienenelements 8 ein erstes Verbindungselement 14 und unterhalb des zweiten Schienenelements 9 ein zweites Verbindungselement 15 angeordnet sind, wobei mit dem ersten Verbindungselement 14 oder zweiten Verbindungselement 15 das zweite Anschlagelement 13 verbunden ist, abhängig davon, auf welcher Seite hinsichtlich der Mittelachse 17 das erste Anschlagelement 12 angeordnet ist.

Besonders bevorzugt ist das erste Verbindungselement 14 direkt mit der ersten Schieneneinheit 8 und das zweite Verbindungselement 15 direkt mit der zweiten Schieneneinheit 9 verbunden. Die Verbindungselemente 14, 15 sind also in Höhenrichtung H zwischen der jeweiligen Schieneneinheit 8, 9 und dem Sitzunterbau-Basisteil 4 angeordnet und mit diesen jeweils verbunden, insbesondere lösbar verbunden, um diese nachträglich einzufügen und gegebenenfalls austauschen zu können. Gleiches gilt für die Anschlagelemente 12, 13.

Bei den Verbindungselementen 14, 15 und den Anschlagelementen 12, 13 handelt es sich um separate Bauteile, welche an einen bestehenden Fahrzeugsitz montiert werden können. Entsprechend ausgebildete Fahrzeugsitze wie gemäß dem Oberbegriff können daher mit den Elementen nachgerüstet werden.

Weiter bevorzugt weisen das erste Verbindungselement 14 und das zweite Verbindungselement 15 eine gleiche Erstreckung in Höhenrichtung H auf. Dadurch, dass das jeweilige Verbindungselement 14, 15 unterhalb der jeweiligen Schieneneinheit 8, 9 angeordnet ist, ist dies notwendig, um keine Schieflage bzw. Unebenheit des Sitzteils zu erhalten. Weiter bevorzugt weisen die Verbindungselemente 14, 15 eine Erstreckung in Breitenrichtung B und Längsrichtung L auf, welche im Wesentlichen der Erstreckung in Breitenrichtung B und Längsrichtung L der Schienenelemente 8, 9 entspricht, bevorzugt geringfügig kleiner ist als die Erstreckung in Breitenrichtung B und Längsrichtung L der Schienenelemente 8, 9.

Weiter bevorzugt sind die Anschlagelemente 12, 13 in der Breitenrichtung gesehen zwischen den Schieneneinheiten 8, 9 angeordnet.

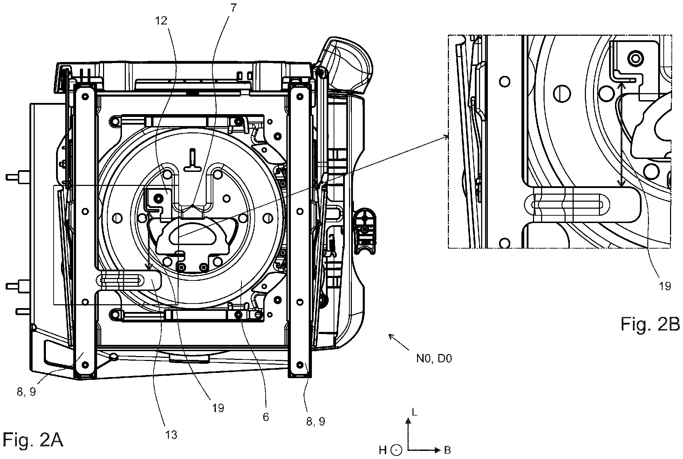

In der Figur 2A ist der Fahrzeugsitz 1 gemäß der Figur 1 in einer Ansicht von unten dargestellt. Die Figur 2B entspricht einem Ausschnitt der Figur 2A.

Die Anschlagelemente 12, 13 weisen einen veränderlichen Abstand 19 zueinander auf, wobei der veränderliche Abstand 19 abhängig ist von der Verlagerungsposition sowie dem Drehwinkel.

Weiter ist zu erkennen, dass der Drehwinkel der Dreheinheit 6 vorliegend 0° beträgt. Dies entspricht einer Null-Position D0 der Dreheinheit 6. Der Fahrzeugsitz 1 befindet sich in der Null-Position N0.

Der veränderliche Abstand 19 entspricht in diesem Fall dem maximalen Verlagerungsweg nach hinten, das heißt, dass wenn sich die Anschlagelemente 12, 13 durch eine Verlagerung des Sitzunterbau-Trageteils 3 zu dem Sitzunterbau-Basisteil 4 nach hinten kontaktieren und wechselwirken, dies einem Endanschlag beschreibt.

Ebenso kann ein maximaler Drehwinkel erreicht werden, um welchen die Dreheinheit 6 bzw. das Sitzteil 2 gedreht werden kann, da eine mögliche Bogenlänge eines Kreisbogens, auf welchem sich das erste Anschlagelement 12 bewegt, maximal ist. Die Bogenlänge bezieht sich auf die Länge des Kreisbogens zwischen der Drehposition beschrieben durch den Drehwinkel 0° und dem tatsächlichen Drehwinkel des Sitzteils 2 bzw. der Dreheinheit 6.

Die Länge des veränderlichen Abstands 19 und die Bogenlänge sind voneinander abhängig. Durch die Länge des veränderlichen Abstands 19 ist die Bogenlänge und durch die Bogenlänge die Länge des veränderlichen Abstands 19 bedingt und voneinander abhängig.

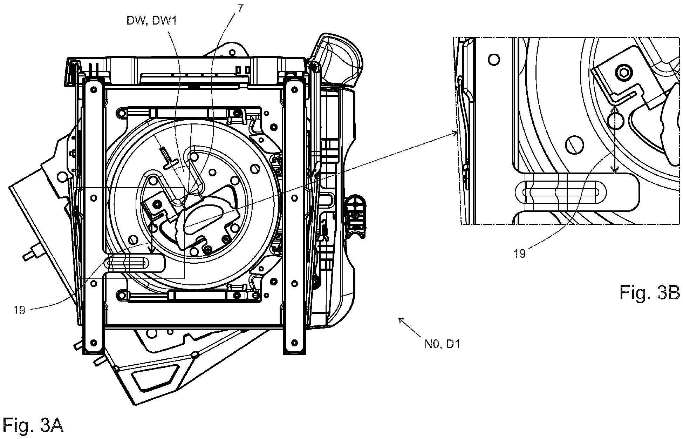

In den Figuren 3A und 3B ist der Fahrzeugsitz 1 in einer weiteren Position dargestellt, vorliegend in einer ersten Drehposition D1 mit einem ersten Drehwinkel DW1. Wie zu erkennen ist, verringert sich der veränderbare Abstand 19 und ist nun kleiner als der Abstand 19 in der Position N0, D0. Das bedeutet, dass eine Verlagerung des Sitzunterbau-Trageteils 3 und entsprechend des Sitzteils 2 nach hinten nur um einen Verlagerungsweg möglich ist, der kleiner ist als der maximal mögliche Verlagerungsweg, welcher in der Position N0, D0 vorliegt.

Die Figur 3B zeigt einen Ausschnitt der Figur 3A in einer vergrößerten Darstellung.

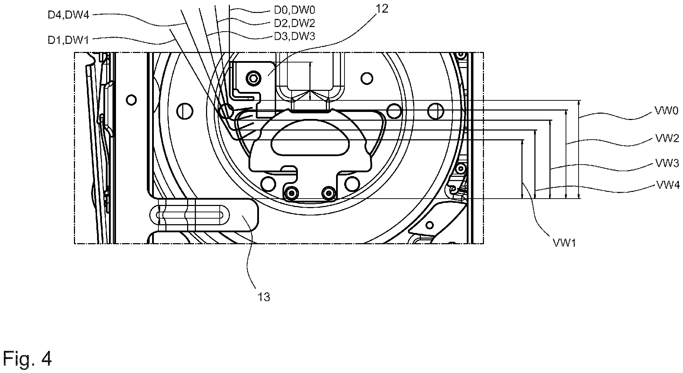

Die Figur 4 zeigt schematisch nochmals das zuvor beschriebene mit verschiedenen Drehwinkeln bzw. Drehpositionen D0, D1, D2, D3, D4 gebildet durch Drehwinkel DW0, DW1, DW2, DW3, DW4 der Dreheinheit 6 und den zugehörigen möglichen Verlagerungswegen VW0, VW1, VW2, VW3, VW4 der Verschiebeeinrichtung 5. Die Umrisse der Anschlagelemente 12, 13 sind dargestellt.

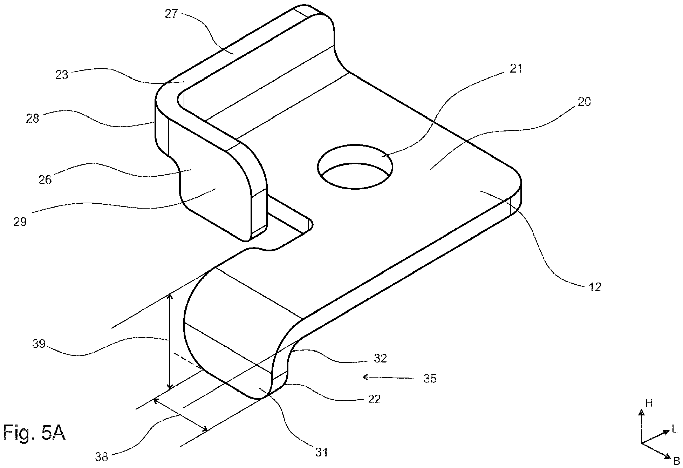

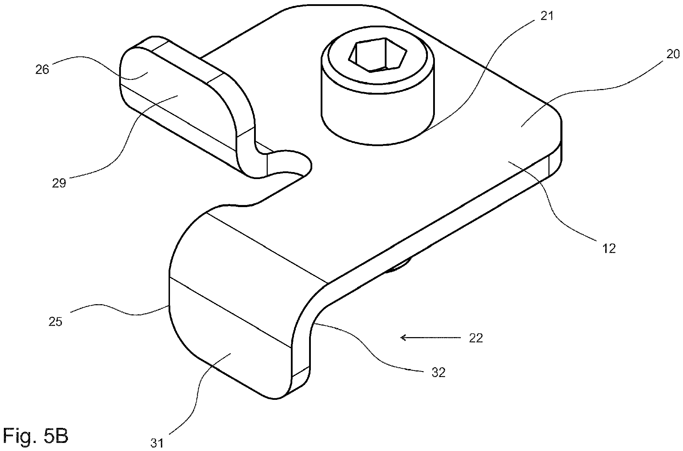

Das erste Anschlagelement 12 kann dabei verschiedene Ausgestaltungen aufweisen, welche in den Figuren 5A und 5B dargestellt sind. Natürlich sind auch weitere Ausgestaltungen denkbar, so dass die Ausführungsformen gemäß Figuren 5A, 5B lediglich als Beispiele zu verstehen sind.

Das in der Figur 5A dargestellte erste Anschlagelement 12 umfasst eine Grundplatte 20, wobei bevorzugt die Grundplatte 20 flächig ausgebildet ist. Weiter ist eine Durchgangsöffnung 21 vorgesehen, welche dazu ausgebildet und vorgesehen ist, dass ein weiteres Element mittels der Durchgangsöffnung 21 sich durch die Grundplatte 20 hindurch erstrecken kann. Das weitere Element kann beispielsweise ein Schraubenelement, ein Nietenelement oder dergleichen sein, so dass das erste Anschlagelement 12 mit der Dreheinheit 6 verbunden werden kann.

Bevorzugt ist lediglich eine Durchgangsöffnung 21 vorgesehen, so dass die Anzahl der Befestigungselemente zum Befestigen des ersten Anschlagselements an der Dreheinheit reduziert ist und eine leichte Montage möglich ist.

Um die Montage weiter erleichtern zu können, ist ein erster Abschnitt 22 vorgesehen, welcher bevorzugt dazu vorgesehen und ausgebildet ist, in eine Ausnehmung 24 der Dreheinheit 6 einzugreifen. Die Ausnehmung 24 ist dazu vorgesehen und ausgebildet, den ersten Abschnitt 22 aufzunehmen. Durch den ersten Abschnitt 22 und der zugehörigen Ausnehmung 24 kann eine zusätzliche Kopplung bzw. Verbindung zwischen dem ersten Anschlagelement 12 und der Dreheinheit 6 hergestellt sein, welche durch deren Ausgestaltung es ermöglicht, dass das erste Anschlagelement 12 korrekt montiert werden kann.

Darüber hinaus kann durch den ersten Abschnitt 22 eine Verdrehsicherung für das erste Anschlagelement 12 bereitgestellt sein, da durch das Vorsehen eines einzelnen Verbindungselements zum Befestigen des ersten Anschlagelements 12 mit der Dreheinheit 6 es trotz einer festen Verbindung zu unerwünschten Drehbewegungen des ersten Anschlagelements 12 gegenüber der Dreheinheit 6 kommen kann, beispielsweise durch Kontaktieren der Anschlagelemente 12, 13 miteinander.

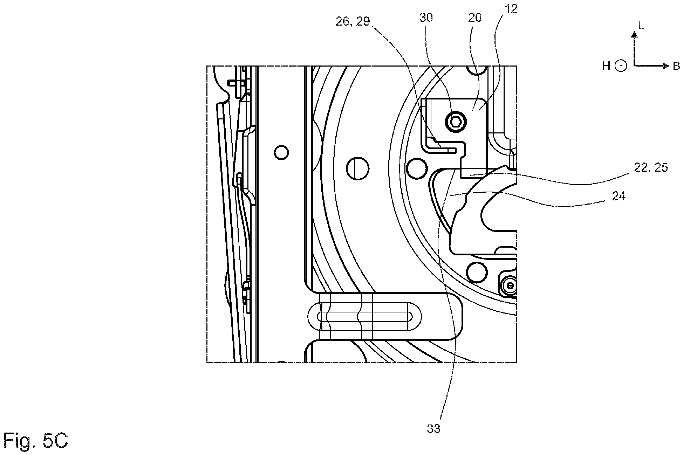

Dazu kann der erste Abschnitt 22 einen ersten Abschnittsbereich 25 umfassen, welcher sich in einer Richtung senkrecht zu der Grundplatte 20 nach oben bzw. nach unten erstreckt mit einer Höhenerstreckung 38. Um als Verdrehsicherung fungieren zu können, ist es bevorzugt vorgesehen, dass der erste Abschnittsbereich 25 eine Breitenerstreckung 38 aufweist, so dass eine Art Zapfen ausgebildet ist, welcher die Ausnehmung 24 kontaktieren kann, wodurch ein mechanischer Kontakt zusätzlich zu dem Verbindungselement mit der Dreheinheit 6 bereitgestellt ist. Dies ist beispielsweise in der Figur 5C dargestellt.

Weiter bevorzugt umfasst das erste Anschlagelement 12 einen zweiten Abschnitt 23, welcher dazu vorgesehen und ausgebildet ist, mit dem zweiten Anschlagelement 13 wechselzuwirken.

Gemäß der Ausführungsform gezeigt in der Figur 5A umfasst der zweite Abschnitt 23 einen ersten Abschnittsbereich 26 und einen zweiten Abschnittsbereich 27, wobei bevorzugt sich der erste Abschnittsbereich 26 in der Breitenrichtung B und sich der zweite Abschnittsbereich 27 in der Längsrichtung L erstrecken. Weiter bevorzugt erstrecken sich die Abschnittsbereiche 26, 27 in Höhenrichtung H nach oben bzw. nach unten, jedoch in die entgegengesetzte Richtung, ausgehend von der Grundplatte 20, wie der erste Abschnittsbereich 25 des ersten Abschnitts 22. Das heißt, dass wenn sich der erste Abschnittsbereich 25 des ersten Abschnitts 22 nach unten erstreckt, erstrecken sich der erste Abschnittsbereich 26 und der zweite Abschnittsbereich 27 des zweiten Abschnitts 23 nach oben, und umgekehrt.

Weiter bevorzugt können der erste Abschnittsbereich 25 und der zweite Abschnittsbereich 26 des zweiten Abschnitts 23 mittels eines Verbindungsabschnitts 28 miteinander verbunden sein, bevorzugt stoffschlüssig verbunden sein. Dadurch, dass die Verbindungsabschnitte 26, 27 miteinander durch den Verbindungsabschnitt 28 verbunden sind und sich senkrecht zueinander erstrecken, kann der zweite Abschnitt 23 besonders stabil ausgebildet werden, so dass Beschädigungen durch Kontaktierung mit dem zweiten Abschnittselement 13 gut verhindert werden können.

Besonders bevorzugt ist der Verbindungsabschnitt 29 bogenförmig ausgebildet, so dass einwirkende Kräfte auf den zweiten Abschnitt 23 gut verteilt bzw. abgeleitet werden können.

Durch den ersten Abschnittsbereich 26 des zweiten Abschnitts 23 kann eine Kontaktfläche 29 ausgebildet werden, welche mit dem zweiten Anschlagelement 13 in Wechselwirkung treten kann.

Gemäß der Ausführungsform des ersten Anschlagelements 12 wie in der Figur 5B gezeigt, ist diese ähnlich zu der Ausführungsform der Figur 5A, wobei hier auf den zweiten Abschnittsbereich 27 verzichtet worden ist. Die Ausführungen zu den weiteren Elementen sind analog zu der Ausführungsform gemäß Figur 5A.

Weiter weist der erste Abschnittsbereich 25 des ersten Abschnitts 22 eine Außenseite 31 und eine Innenseite 32 auf. Besonders bevorzugt ist die Anordnung des ersten Anschlagelements 12 derart, dass die Innenseite 32 mit der Ausnehmung 24 der Dreheinheit 6 in Kontakt steht, insbesondere in Wirkkontakt durch eine reibschlüssige Verbindung.

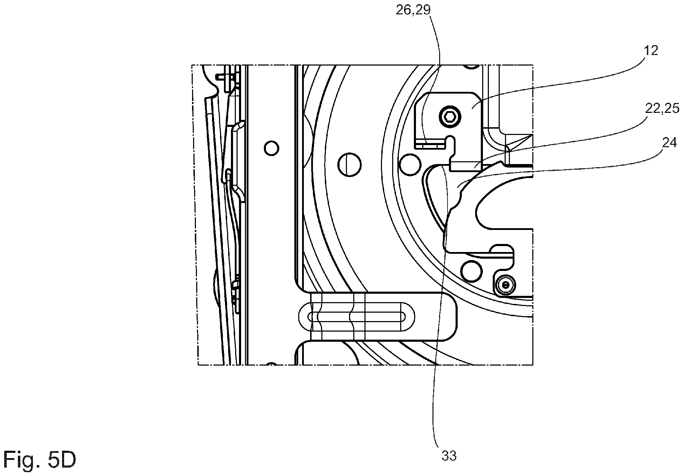

Die Verbindung des ersten Anschlagelements 12 zu der Dreheinheit 6 ist in den Figuren 5C und 5D näher dargestellt.

Besonders bevorzugt steht das erste Anschlagelement 12 mit der Dreheinheit 6 einerseits mittels des Verbindungselements 30 und andererseits durch die Kontaktierung der Innenseite 32 des ersten Abschnittsbereichs 25 mit einer Innenseite 33 der Ausnehmung 24 in Kontakt, wodurch eine verdrehsichere Verbindung zwischen dem ersten Anschlagelement 12 und der Dreheinheit 6 möglich ist. Auch wird die Montage des ersten Anschlagelements 12 erleichtert, da durch den ersten Abschnittbereich 25 die Positionierung des ersten Anschlagelements 12 zumindest teilweise oder vollständig vorgegeben ist. Es können Markierungen oder auch kleine Rasteinsprünge vorgesehen sein zur Positionierung des ersten Abschnittbereichs 25.

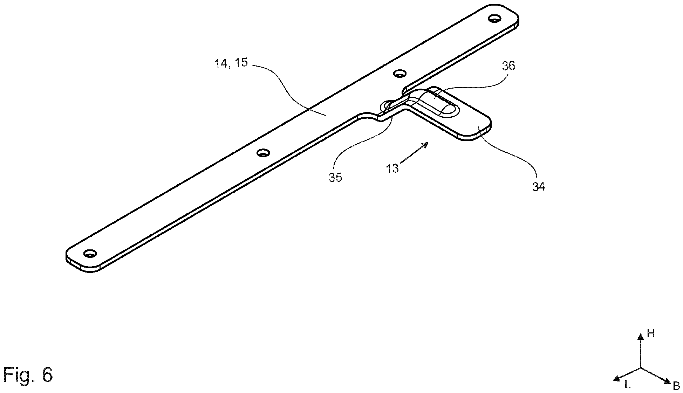

Gemäß der Figur 6 ist eine mögliche Ausgestaltung des zweiten Anschlagelements 13 dargestellt. Natürlich sind auch weitere Ausgestaltungen denkbar, so dass die Figur 6 lediglich ein Beispiel für eine Ausgestaltung des zweiten Anschlagelements 13 zeigt.

Das zweite Anschlagelement 13 umfasst einen ersten Anschlagbereich 34, welcher dazu vorgesehen ist, mit dem ersten Anschlagelement 12 wechselzuwirken. Bevorzugt ist der erste Anschlagbereich 34 flächig ausgebildet, wobei die Haupterstreckungen in der Längsrichtung L und der Breitenrichtung B liegen und größer als die Erstreckung in Höhenrichtung H ausgebildet sind. Das bedeutet, dass der erste Anschlagbereich 34 im Wesentlichen senkrecht zu der Kontaktfläche 29 ausgebildet ist, wodurch ein Verkanten der Anschlagelemente 12, 13 erreicht wird und auch Höhenabweichungen des ersten Abschnittbereichs 25 nicht ins Gewicht fallen. In Längsrichtung L gesehen überlappen sich das erste Anschlagelement 12 und das zweite Anschlagelement 13.

Besonders bevorzugt ist das zweite Anschlagelement 13 mit ersten Verbindungselement 14 oder dem zweiten Verbindungselement 15 verbunden, abhängig von der Anordnung des ersten Anschlagelements 12. Dazu ist ein Übergangsbereich 35 vorgesehen, welcher das zweite Anschlagelement 13 mit dem Verbindungselement 14, 15 verbindet. Insbesondere sind das zweite Anschlagelement 13 und das Verbindungselement 14, 15 stoffschlüssig mit dem Übergangsbereich 35 verbunden. Insbesondere verläuft der Übergangsbereich schräg, also in einem Winkel zu einer Ebene gebildet aus der Längsrichtung L und der Breitenrichtung B, in Höhenrichtung H nach oben. Das zweite Anschlagelement 13 ist entsprechend in Höhenrichtung H oberhalb des Verbindungselements 14, 15 angeordnet.

Weiter bevorzugt kann eine Verstärkung 36 vorgesehen sein, etwa eine Verstärkung 36 des Materials. Bevorzugt ist die Verstärkung 36 mit dem Übergangsbereich 35 und dem ersten Anschlagbereich 34 verbunden und insbesondere integral oder stoffschlüssig damit. Durch die Verstärkung 36 können auftretende Kräfte durch die Wechselwirkung der Anschlagelemente 12, 13 gut aufgenommen werden und eine Beschädigung, beispielsweise durch Verformung, verhindert werden.

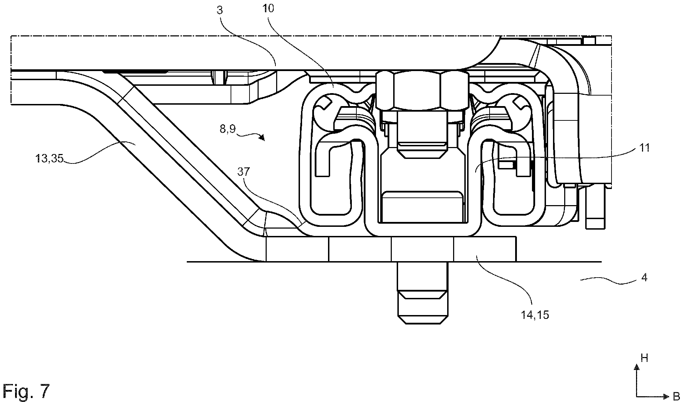

In der Figur 7 ist ein Schnitt einer Vorderansicht dargestellt, welche die Anordnung der Schieneneinheiten 8, 9, des Verbindungselements 14, 15 und des zweiten Anschlagelements 13 näher darstellt.

Das Verbindungselement 14, 15 ist zwischen der Schieneneinheit 8, 9 und dem Sitzunterbau-Basisteil 4 angeordnet, wobei die Schieneneinheit 8, 9 eine Beabstandung 37 zu dem Übergangsbereich 35 bzw. dem zweiten Anschlagelement 13 aufweist.

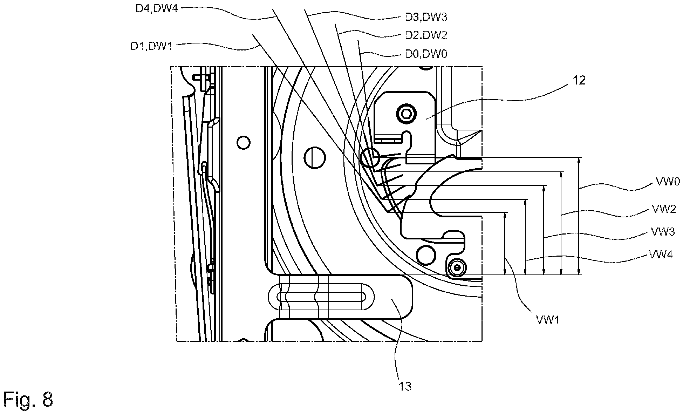

Die Figur 8 ist gleichbedeutend zu der Figur 4, wobei das erste Anschlagelement 12 gemäß der Ausführungsform der Figur 5B dargestellt ist.

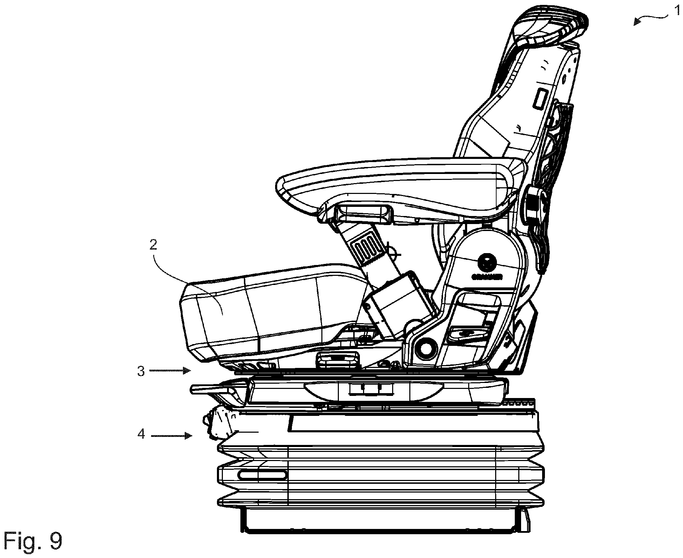

Die Figur 9 zeigt den Fahrzeugsitz 1 in einer seitlichen Darstellung mit dem Sitzteil 2, dem Sitzunterbau-Trageteil 3 und dem Sitzunterbau-Basisteil 4.

Alle aufgeführten Merkmale können miteinander in beliebiger Weise kombiniert werden.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Fahrzeugsitz
- 2: Sitzteil
- 3: Sitzunterbau-Trageteil
- 4: Sitzunterbau-Basisteil
- 5: Verschiebeeinrichtung
- 6: Dreheinheit
- 7: Drehachse
- 8: erste Schieneneinheit
- 9: zweite Schieneneinheit
- 10: erstes Schienenelement
- 11: zweites Schienenelement
- 12: erstes Anschlagelement
- 13: zweites Anschlagelement
- 14: erstes Verbindungselement
- 15: zweites Verbindungselement
- 16: erster Abstand
- 17: Mittelachse
- 18: zweiter Abstand
- 19: veränderlicher Abstand
- 20: Grundplatte
- 21: Durchgangsöffnung
- 22: erster Abschnitt
- 23: zweiter Abschnitt
- 24: Ausnehmung
- 25: erster Abschnittsbereich
- 26: erster Abschnittsbereich
- 27: zweiter Abschnittsbereich
- 28: Verbindungsabschnitt
- 29: Kontaktfläche
- 30: Befestigungselement
- 31: Außenseite
- 32: Innenseite
- 33: Innenseite der Ausnehmung
- 34: erster Anschlagbereich
- 35: Übergangsbereich
- 36: Verstärkung
- 37: Beabstandung
- 38: Breitenerstreckung
- 39: Höhenerstreckung

- DW: Drehwinkel
- VP: Verlagerungsposition
- VR: Verlagerungsrichtung
- R: Richtung
- L: Längsrichtung
- B: Breitenrichtung
- H: Höhenrichtung

## Patentansprüche

1. Fahrzeugsitz (1) mit einem Sitzteil (2) und mit einem unterhalb des Sitzteils (2) angeordneten Sitzunterbau-Trageteil (3), welches dazu vorgesehen und ausgebildet ist, das Sitzteil (2) zu tragen, und einem Sitzunterbau-Basisteil (4), wobei das Sitzunterbau-Trageteil (3) gegenüber dem Sitzunterbau-Basisteil (4) mittels einer Verschiebeeinrichtung (5) entlang einer Verlagerungsrichtung (VR) verschiebbar ist und wobei eine Dreheinheit (6) vorgesehen ist, welche dazu vorgesehen und ausgebildet ist, dass das Sitzteil (2) gegenüber dem Sitzunterbau-Trageteil (3) um eine Drehachse (7) drehbar ist,
**dadurch gekennzeichnet, dass**
bei einer Verlagerung des Sitzunterbau-Trageteils (3) eine Verlagerungsposition (VP) des Sitzunterbau-Trageteils (3) abhängig ist von einem Drehwinkel (DW) der Dreheinheit (6) und bei einer Drehung des Sitzteils (2) der Drehwinkel (DW) der Dreheinheit (6) abhängig ist von der Verlagerungsposition (VP) des Sitzunterbau-Trageteils (3).

2. Fahrzeugsitz (1) nach Anspruch 1,
**dadurch gekennzeichnet, dass**
bei Verlagerung des Sitzunterbau-Trageteils (3) abhängig von dem Drehwinkel (DW) begrenzt ist, und bei Drehung des Sitzteils (2) der Drehwinkel (DW) abhängig von der Verlagerungsposition (VP) begrenzt ist.

3. Fahrzeugsitz (1) nach Anspruch 1 oder 2,
**dadurch gekennzeichnet, dass**
die Verschiebeeinrichtung (5) eine erste Schieneneinheit (8) und eine zweite Schieneneinheit (9) mit jeweils einem erstes Schienenelement (10) und einem zweitem Schienenelement (11) aufweist, wobei die Schieneneinheiten (8, 9) in einer Richtung (R) senkrecht zu der Verlagerungsrichtung (VR) voneinander beabstandet sind.

4. Fahrzeugsitz (1) nach Anspruch 3,
**dadurch gekennzeichnet, dass**
jeweils das erste Schienenelement (10) mit dem Sitzunterbau-Trageteil (3) und das zweite Schienenelement (11) mit dem Sitzunterbau-Basisteil (4) verbunden ist und die Schienenelemente (10, 11) derart zueinander ausgebildet sind, dass das erste Schienenelement (10) gegenüber dem zweiten Schienenelement (11) verschiebbar ist.

5. Fahrzeugsitz (1) nach Anspruch 1 bis 4,
**dadurch gekennzeichnet, dass**
die Dreheinheit (6) mit dem Sitzunterbau-Trageteil (3) verbunden ist.

6. Fahrzeugsitz (1) nach einem der Ansprüche 1 bis 5,
**dadurch gekennzeichnet, dass**
ein erstes Anschlagelement (12) mit der Dreheinheit (6) und ein zweiten Anschlagelement (13) mit der Verschiebeeinrichtung (5) verbunden sind, wobei die Anschlagelement (12, 13) derart ausgebildet sind, dass die Anschlagelemente (12,13) miteinander wechselwirken können.

7. Fahrzeugsitz (1) nach Anspruch 6,
**dadurch gekennzeichnet, dass**
das zweite Anschlagelement (13) ortsfest mit dem Sitzunterbau-Basisteil (4) verbunden ist.

8. Fahrzeugsitz (1) nach Anspruch 3 und einem der Ansprüche 6 bis 7,
**dadurch gekennzeichnet, dass**
das zweite Anschlagelement (13) in der Richtung (R) senkrecht zu der Verlagerungsrichtung (VR) gesehen zwischen der ersten Schieneneinheit (8) und der zweiten Schieneneinheit (9) angeordnet ist.

9. Fahrzeugsitz (1) nach einem der Ansprüche 6 bis 8,
**dadurch gekennzeichnet, dass**
das erste Anschlagelement (12) und das zweite Anschlagelement (13) in der Verlagerungsrichtung (VR) gesehen überlappend zueinander ausgebildet sind.

10. Fahrzeugsitz (1) nach einem der Ansprüche 6 bis 9,
**dadurch gekennzeichnet, dass**
ein erstes Verbindungselement (14) und ein zweites Verbindungselement (15) vorgesehen sind, wobei das erste Verbindungselement (14) unterhalb der ersten Schieneneinheit (8) und das zweite Verbindungselement (15) unterhalb der zweiten Schieneneinheit (9) angeordnet ist und das zweite Anschlagelement (13) mit dem ersten Verbindungselement (14) verbunden ist.

11. Fahrzeugsitz (1) nach einem der Ansprüche 6 bis 10,
**dadurch gekennzeichnet, dass**
das erste Anschlagelement (12), entlang der Verlagerungsrichtung (VR) gesehen, vor dem zweiten Anschlagelement (13) angeordnet ist.
